# EUROPÄISCHE PATENTSCHRIFT

(11) **EP 4 393 685 B1**
(45) Veröffentlichungstag und Bekanntmachung des Hinweises auf die Patenterteilung: **01.10.2025**
(21) Anmeldenummer: 23204382.8
(22) Anmeldetag: 18.10.2023
(51) Int. Cl.: B29C 70/08, B29C 70/48

(54) **VERFAHREN UND VORRICHTUNG ZUM BESCHICHTEN EINES GEGEBENENFALLS DURCH EINE FASERAUFLAGE VERSTÄRKTEN SCHAUMSTOFFKERNS**
METHOD AND APPARATUS FOR COATING A FOAM CORE OPTIONALLY REINFORCED BY A FIBROUS LAYER
PROCÉDÉ ET DISPOSITIF POUR REVÊTIR UN NOYAU EN MOUSSE RENFORCÉ ÉVENTUELLEMENT PAR UN REVÊTEMENT FIBREUX

(30) Priorität: 30.12.2022 AT 510112022
(43) Veröffentlichungstag der Anmeldung: 03.07.2024
(73) Patentinhaber: Knaipp, Ortwin, 1190 Wien (AT)
(72) Erfinder: Knaipp, Ortwin, 1190 Wien (AT)
(74) Vertreter: Hübscher & Partner Patentanwälte GmbH

(56) Entgegenhaltungen:
- DE-A1- 1 504 759
- DE-A1- 3 644 434
- FR-A1- 2 201 384

## Beschreibung

Die Erfindung bezieht sich auf ein Verfahren zum Beschichten eines gegebenenfalls durch eine Faserauflage verstärkten Schaumstoffkerns mit einem aus einem Reaktionsgemisch polymerisierenden Kunststoff in einem aus einem Unterteil und einem Oberteil zusammengesetzten Formwerkzeug, das im Bereich seiner Stoßfläche auf einander gegenüberliegenden Seiten einerseits einen Angusskanal und anderseits einen Überlauf aufweist, wobei der Schaumstoffkern in das Formwerkzeug unter Freihaltung einer Beschichtungskavität zwischen dem Schaumstoffkern und den formgebenden Oberflächen des Formwerkzeugs eingesetzt und das Reaktionsgemisch durch den Angusskanal in die Beschichtungskavität des geschlossenen Formwerkzeugs eingespritzt wird.

Zur Herstellung eines Verbundwerkstücks aus einem Kern und einer den Kern umhüllenden Beschichtung kann der Kern unter Freilassung einer Beschichtungskavität in ein Formwerkzeug eingesetzt und dann der Kunststoff in die Beschichtungskavität zur Ausbildung der Umhüllung des Kerns eingespritzt werden. Wird in die Beschichtungskavität ein Reaktionsgemisch eingebracht, das erst in der Beschichtungskavität zum Kunststoff polymerisiert, so ergeben sich bei diesen Niederdruckverfahren Schwierigkeiten hinsichtlich der Anbindung des Kunststoffs an den Kern, insbesondere wenn dieser Kern aus Schaumstoff mit einer verstärkenden Faserauflage, beispielsweise in Form eines Gewebes oder Vlieses aus Glas- oder Kohlenstofffasern gefertigt ist, weil der durch Polymerisation in der Beschichtungskavität gebildete Kunststoff die Faserauflage nur teilweise durchsetzt und sich nur mangelhaft mit dem Schaumstoffkern verbindet.

Um bei der Herstellung von Formteilen oder Beschichtungen aus einem durch Polymerisation eines Reaktionsgemisches in einem Formwerkzeug erhaltenen Kunststoff die durch reaktive und thermische Schwindungen entstehenden Fehlstellen sowie die sich während des Einspritzens des Reaktionsgemisches in die Formteilkavitäten bildenden Lufteinschlüsse oder Gasblasen zu vermeiden oder auszugleichen, ist es bekannt (EP 1 561 569 A1), das Reaktionsgemisch in der Formteilkavität einem entsprechenden Druck auszusetzen. Zu diesem Zweck wird die Formteilkavität nach dem Einspritzen des Reaktionsgemisches mit einem gasförmigen Druckmedium beaufschlagt, das durch einen Überlauf und/oder den Angusskanal des Formwerkzeugs zugeführt wird.

Anstelle einer Beaufschlagung des in der Formteilkavität reagierenden Reaktionsgemisches mit einem Druckgas kann das Reaktionsgemisch auch durch einen Stempel einem entsprechenden Druck ausgesetzt werden (EP 0 294 768 A1). Der Stempel kann hierfür die Formfläche des Oberteils des Formwerkzeugs bilden, sodass das Oberteil über die gesamte Formfläche Druck auf das Reaktionsgemisch ausübt. Da die ein faserförmiges Verstärkungsmaterial aufnehmende, evakuierte Formteilkavität ein das spätere Werkstückvolumen übersteigendes Aufnahmevolumen für das durch einen Angusskanal eingespritzte Reaktionsgemisch aufweist, wird beim Verdichtungshub des als Tauchwerkzeug wirkenden Oberteils des Formwerkzeugs ein Teil des Reaktionsgemisches durch einen Überlauf aus der Formteilkavität ausgetragen.

DE 15 04 759 A1 DE 36 44 434 A1 offenbart ein Verfahren zum Beschichten eines gegebenenfalls durch eine Faserauflage verstärkten Schaumstoffkern mit einem aus einem Reaktionsgemisch polymerisierten Kunststoff in einem aus einem Unterteil und einem Oberteil zusammengesetzten Formwerkzeug, das im Bereich seiner Stoßfläche auf einander gegenüberliegenden Seiten einerseits einen Angusskanal und anderseits einen Überlauf aufweist, wobei der Schaumstoffkern in das Formwerkzeug unter Freihaltung einer Beschichtungskavität zwischen dem Schaumstoffkern und den formgebenden Oberflächen des Formwerkzeugs eingesetzt und das Reaktionsgemisch durch den Angusskanal in die Beschichtungskavität des geschlossenen Formwerkzeugs eingespritzt wird.

DE 15 04 759 A1 offenbart eine Vorrichtung zum Beschichten eines gegebenenfalls durch eine Faserauflage verstärkten Schaumstoffkerns mit einem aus einem Reaktionsgemisch aushärtenden Kunststoff mit einem aus einem Unterteil und einem Oberteil zusammengesetzten Formwerkzeug, dessen Unterteil im Bereich seiner Stoßfläche auf einander gegenüberliegenden Seiten einerseits einen Angusskanal und anderseits einen Überlauf aufweist.

Unabhängig davon, ob während der Polymerisation des Reaktionsgemisches in der Formteilkavität der Druck auf das Reaktionsgemisch durch ein Druckgas oder einen Stempel ausgeübt wird, besteht insbesondere bei der Herstellung von Verbundwerkstücken aus einem eine Verstärkung in Form einer Faserauflage aufweisenden Schaumstoffkern die Gefahr, dass bei der Polymerisation des in die Beschichtungskavität zwischen dem Schaumstoffkern und den Formflächen des Formwerkzeugs eingebrachten Reaktionsgemisches der entstehende Kunststoff nur mangelhaft an den faserverstärkten Schaumstoffkern angebunden wird.

Der Erfindung liegt somit die Aufgabe zugrunde, ein Verfahren zum Beschichten eines gegebenenfalls durch eine Faserauflage verstärkten Schaumstoffkerns mit einem aus einem Reaktionsgemisch polymerisierenden Kunststoff in einem aus einem Unterteil und einem Oberteil zusammengesetzten Formwerkzeug so auszugestalten, dass sich eine vorteilhafte Anbindung des Kunststoffmantels an den Schaumstoffkern einstellt.

Ausgehend von einem Verfahren der eingangs geschilderten Art löst die Erfindung die gestellte Aufgabe dadurch, dass das Reaktionsgemisch vom Angusskanal in einem unteren Scheitelbereich der Beschichtungskavität zum Überlauf in einem oberen Scheitelbereich ansteigend in die Beschichtungskavität eingespritzt wird und dass nach einem teilweisen Aushärten des aus dem Reaktionsgemisch entstehenden Kunststoffs die Beschichtung bis zur vollständigen Aushärtung des Kunststoffs durch einen die Formfläche des Oberteils bildenden Stempel an den Schaumstoffkern angedrückt gehalten wird
das Reaktionsgemisch in die Beschichtungskavität eingespritzt wird, während das Formwerkzeug um eine quer zu einem den Angusskanal mit dem Überlauf verbindenden Durchmesser des Formwerkzeugs und parallel zu seiner Stoßfläche verlaufende Schwenkachse in eine Endstellung verschwenkt wird, in der der Überlauf in einem oberen Scheitelbereich der Beschichtungskavität liegt, und dass nach einem teilweisen Aushärten des aus dem Reaktionsgemisch entstehenden Kunststoffs die Beschichtung bis zur vollständigen Aushärtung des Kunststoffs durch einen die Formfläche des Oberteils bildenden Stempel an den Schaumstoffkern angedrückt gehalten wird.

Durch den ansteigenden Guss wird die Luft durch das in die Beschichtungskavität eingespritzte Reaktionsgemisch allmählich nach oben gegen den Überlauf aus der Beschichtungskavität verdrängt, was eine wesentliche Voraussetzung für das Vermeiden von in Toträumen der Beschichtungskavität verbleibenden Lufteinschlüssen ist.

Da aufgrund der Temperaturbedingungen der aus dem Reaktionsgemisch polymerisierte Kunststoff von außen nach innen, also von den Formflächen des Formwerkzeugs zum Schaumstoffkern hin aushärtet, werden der Überlauf und der Angusskanal nach einer Teilaushärtung des Kunststoffs durch eine ausreichend ausgehärtete Kunststoffaußenschale abgeschlossen, um durch den Stempel des Oberteils einen entsprechenden Druck auf das Werkstück ausüben zu können, und zwar ohne Gefahr zu laufen, noch nicht ausgehärteten Kunststoff durch den Überlauf oder den Angusskanal aus der Beschichtungskavität zu verdrängen. Durch das Zusammenwirken der durch den steigenden Guss ermöglichten Entlüftung mit der anschließenden Druckbeaufschlagung des teilweise ausgehärteten polymerisierten Kunststoffs wird nicht nur eine den Formflächen des Formwerkzeugs entsprechende, fehlerfreie Oberfläche des Kunststoffmantels, sondern auch eine innige Verbindung des Kunststoffs mit dem Schaumstoffkern sichergestellt. Der Kunststoff dringt ja durch eine allfällige Faserauflage bis zum Schaumstoffkern vor und verkrallt sich mit der Faserauflage und der porigen Oberfläche des Schaumstoffkerns.

Die vollständige Entlüftung der Beschichtungskavität während des Einspritzens des Reaktionsgemischs in die Beschichtungskavität bedingt einen Angusskanal in einem unteren Scheitelbereich und einen Überlauf in einem oberen Scheitelbereich der Beschichtungskavität, was mithilfe des dem Angusskanal diametral gegenüberliegenden Überlauf einfach sicherzustellen ist, beispielsweise dadurch, dass das Formwerkzeug mit einem entsprechend geneigten Durchmesser zwischen dem Angusskanal und dem Überlauf angeordnet wird. Zur Verbesserung der Entlüftung der Beschichtungskavität kann das Reaktionsgemisch in die Beschichtungskavität eingespritzt werden, während das Formwerkzeug um eine quer zu einem den Angusskanal mit dem Überlauf verbindenden Durchmesser des Unterwerkzeugs und parallel zu seiner Stoßfläche verlaufende Schwenkachse aus einer Ausgangsstellung in eine Endstellung verschwenkt wird, in der der Überlauf im oberen Scheitelbereich der Beschichtungskavität liegt. Durch das Verschwenken des Formwerkzeugs um eine parallel zur Stoßfläche und quer zu einem den Angusskanal mit dem Überlauf verbindenden Durchmesser des Formwerkzeugs verlaufende Schwenkachse, üblicherweise eine horizontale Achse, wird die Luft innerhalb der Beschichtungskavität zusätzlich bewegt, wodurch die Entlüftung unterstützt wird. Die Luft entweicht somit durch den sich während des Verschwenkens des Formwerkzeugs nach oben bewegenden Überlauf aus der Beschichtungskavität, und zwar bis zur vollständigen Befüllung der Beschichtungskavität. Der Überlauf kommt beim Verschwenken des Formwerkzeugs in die Endstellung in einem oberen Scheitelbereich der Beschichtungskavität zu liegen und wird daher erst durch das eingespritzte Reaktionsgemisch für einen Luftdurchtritt verschlossen, wenn der Einspritzvorgang abgeschlossen ist.

Um die Entlüftung des Formwerkzeugs während des Einspritzens des Reaktionsgemisches zu unterstützen, kann die Beschichtungskavität während des Befüllens mit dem Reaktionsgemisch durch den Überlauf mit einem Unterdruck beaufschlagt werden.

Zur Durchführung eines erfindungsgemäßen Herstellungsverfahrens kann von einer Vorrichtung mit einem aus einem Unterteil und einem Oberteil zusammengesetzten Formwerkzeug, das im Bereich seiner Stoßfläche auf einander gegenüberliegenden Seiten einerseits einen Angusskanal und anderseits einen Überlauf aufweist, und mit einem das Formwerkzeug aufnehmenden Gestell ausgegangen werden, das eine Anstellführung und einen Anstelltrieb für das gegenüber dem gestellfesten Unterteil verlagerbare Oberteil bildet. Bei einer solchen Vorrichtung braucht lediglich das Gestell in einem Tragrahmen um eine Achse verschwenkbar gelagert zu werden, die quer zu einer Ebene verläuft, die einerseits durch die Anstellrichtung des Oberteils und anderseits durch einen den Angusskanal mit dem Überlauf verbindenden Durchmesser des Formwerkzeugs bestimmt wird. Außerdem muss das Oberteil einen seine Formfläche bildenden, in Anstellrichtung verlagerbaren Stempel umfassen, um nach dem von einem Verschwenken des Formwerkzeugs begleiteten Einspritzen des Reaktionsgemisches in die Beschichtungskavität zwischen dem Schaumstoffkern und den Formflächen des Formwerkzeugs und nach einem teilweisen Aushärten des die Beschichtungskavität vollständig ausfüllenden, aus dem Reaktionsgemisch polymerisierten Kunststoffs einen entsprechenden Verdichtungsdruck auf den aushärtenden Kunststoff ausüben zu können.

Das Oberteil des Formwerkzeugs kann den Stempel in Form eines Tauchwerkzeugs bilden, das beim Schließen des Formwerkzeugs formschlüssig in das Unterteil eintaucht. Bei einer solchen Ausbildung des Formwerkzeugs ergeben sich vorteilhafte Konstruktionsverhältnisse, wenn der Stempel im Oberteil in Anstellrichtung vorzugsweise gegen eine Rückstellkraft verschiebbar gelagert und durch einen Stelltrieb antreibbar ist. Nach einem Schließen des Formwerkzeugs mithilfe des Anstelltriebs kann somit der Stempel zusätzlich durch den Stelltrieb mit einer entsprechenden Druckkraft beaufschlagt werden, um den aushärtenden Kunststoff in der Beschichtungskavität zu verdichten.

Um die Entlüftung des Formwerkzeugs während seines Verschwenkens und seiner Befüllung mit dem Reaktionsgemisch zu unterstützen, kann der Überlauf an eine Vakuumpumpe angeschlossen werden.

Zur Steuerung des Einspritzvorgangs kann der Überlauf einen an eine Steuerung für die Fördereinrichtung des Reaktionsgemischs in den Angusskanal angeschlossenen Signalgeber für das Eindringen des Reaktionsgemischs in den Überlauf aufweisen, wenn nicht eine entsprechende Füllmenge vorgegeben wird. Da die Befüllung der Beschichtungskavität mit dem Ansprechen des Signalgebers im Überlauf abgeschlossen ist, können die Fördereinrichtung für das Reaktionsgemisch und eine gegebenenfalls an den Überlauf angeschlossene Vakuumpumpe abgestellt werden, um nach einer festgelegten Reaktionszeit die Druckbeaufschlagung des Werkstücks durch den Stempel einzuleiten.

Anhand der Zeichnung wird das erfindungsgemäße Verfahren näher erläutert.

Es zeigen
Fig. 1 ein Ausführungsbeispiel einer erfindungsgemäßen Vorrichtung zum Beschichten eines gegebenenfalls durch eine Faserauflage verstärkten Schaumstoffkerns in einer Ausgangsstellung mit geöffnetem Formwerkzeug in einer schematischen Seitenansicht,
Fig. 2 die Vorrichtung nach Fig. 1 mit dem in seine Endstellung verschwenkten Formwerkzeug und
Fig. 3 einen schematischen Schnitt durch das Formwerkzeug in der verschwenkten Endstellung in einem größeren Maßstab.

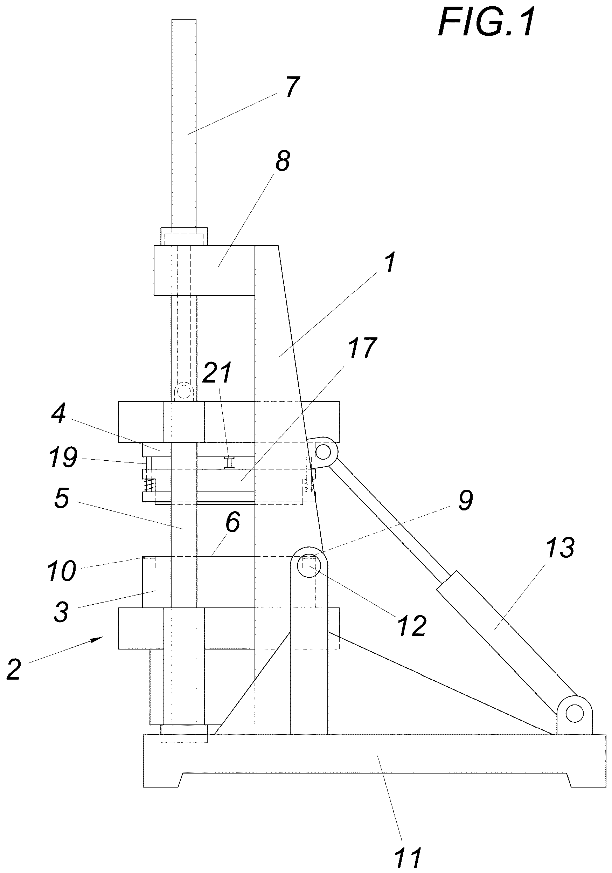

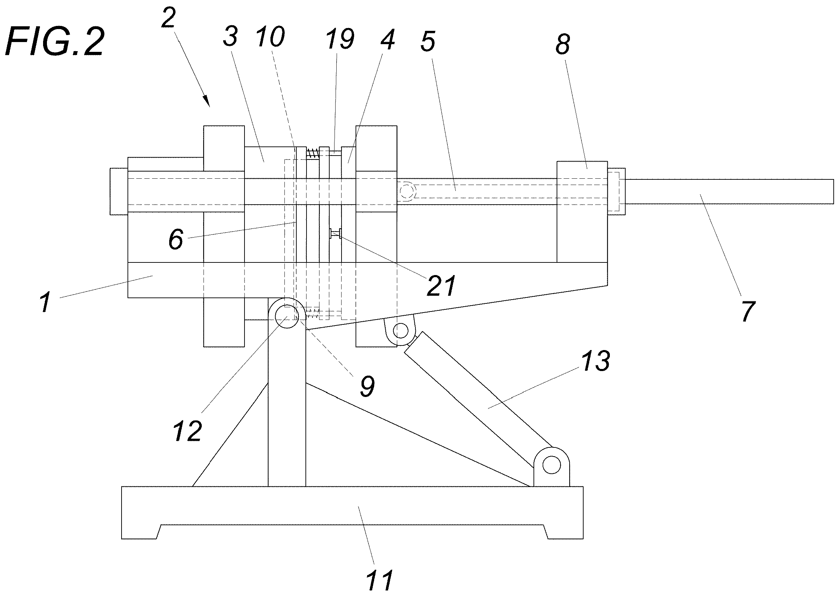

Gemäß den Fig. 1 und 2 weist eine erfindungsgemäße Vorrichtung ein in einem Gestell 1 angeordnetes Formwerkzeug 2 aus einem Unterteil 3 und einem Oberteil 4 auf. Während das Unterteil 3 gestellfest angeordnet ist, ist das Oberteil 4 auf seitlich neben dem Unterteil 3 vorgesehenen, eine Anstellführung 5 bildenden Führungssäulen verschiebbar gelagert, die in Schließrichtung des Formwerkzeugs 2 und damit quer zur Stoßfläche 6 des Unterteils 3 verlaufen. Zwischen den Führungssäulen greift ein Anstelltrieb 7 am Oberteil 4 des Formwerkzeugs 2 an, der gemäß dem Ausführungsbeispiel zwei an einem Joch 8 des Gestells 1 abgestützte Hydraulikzylinder umfasst, was jedoch keinesfalls zwingend ist.

Das Unterteil 3 des Formwerkzeugs 2 weist im Bereich seiner Stoßfläche 6 auf einer Seite einen Angusskanal 9 auf, der in herkömmlicher Art an einen Mischkopf für ein Reaktionsgemisch zum Polymerisieren eines Kunststoffs angeschlossen ist, was jedoch aus Übersichtlichkeitsgründen nicht dargestellt ist. Diametral gegenüber dem Angusskanal 9 ist ein Überlauf 10 vorgesehen, der mit einer Vakuumpumpe verbunden wird. Eine Anordnung des Angusskanals 9 und/oder des Überlaufs 10 im Oberteil ist jedoch keineswegs ausgeschlossen.

Das Gestell 1 ist in einem Tragrahmen 11 um eine Schwenkachse 12 drehbar gelagert und kann mittels eines Schwenktriebs 13 aus einer in der Fig. 1 dargestellten Ausgangslage in eine Endstellung nach der Fig. 2 verschwenkt werden. Die Schwenkachse 12 verläuft einerseits parallel zur Stoßfläche 6 des Unterteils 3 und somit üblicherweise horizontal und anderseits quer zu einem zwischen dem Angusskanal 9 und dem Überlauf 10 verlaufenden Durchmesser des Formwerkzeugs 2 und demnach auch quer zu einer Ebene, die durch die Schließrichtung des Oberteils 4 einerseits und des Durchmessers zwischen Angusskanal 9 und Überlauf 10 anderseits bestimmt wird. Diese Anordnung stellt bei einem Verschwenken des Formwerkzeugs 2 im Sinne einer Aufwärtsverlagerung des Überlaufs 10 sicher, dass das Formwerkzeug 2 durch den Überlauf 10 während des Verschwenkens unter Vermeidung von Lufteinschlüssen entlüftet werden kann, während ein Reaktionsgemisch durch den Angusskanal 9 in das Formwerkzeug 2 eingespritzt wird. Bei einer von der Werkstückform abhängigen, diametralen Anordnung von Angusskanal 9 und Überlauf 10 kann somit erreicht werden, dass sich der Angusskanal 9 beim Verschwenken des Formwerkzeugs 2 im tiefsten Bereich des Formraums und der Überlauf 10 in dessen oberen Scheitelbereich befindet, sodass beim Verschwenken des Formwerkzeugs 2 das Reaktionsgemisch von unten nach oben in die Beschichtungskavität eingetragen wird. Der für die Scheitellage des Überlaufs 10 erforderliche Schwenkwinkel für das Formwerkzeug 2 ist von der Formteilgeometrie abhängig und daher in Abhängigkeit von der Formteilgeometrie entsprechend einzustellen. Dieser Schwenkwinkel für das Formwerkzeug 2 ist auch maßgebend, wenn das Reaktionsgemisch nicht während des Verschwenkens, sondern bei feststehendem Formwerkzeug in die Beschichtungskavität eingespritzt wird, weil sich bei dieser Schwenkstellung des Formwerkzeugs 2 der Angusskanal 9 im unteren und der Überlauf im oberen Scheitelbereich der Beschichtungskavität befindet.

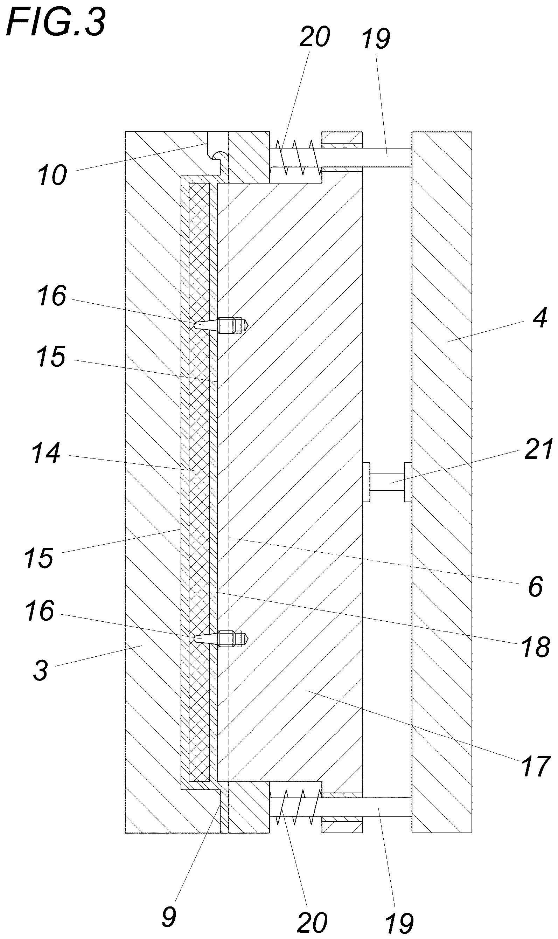

Zum Beschichten eines vorzugsweise durch eine Faserauflage verstärkten Schaumstoffkerns 14 wird dieser Schaumstoffkern 14 unter Freihaltung einer Beschichtungskavität zwischen dem Schaumstoffkern 14 und den Formflächen 15 des Unterteils 3 und des Oberteils 4 in das Formwerkzeug 2 eingebracht. Zu diesem Zweck ist das Oberteil 4 gemäß der Fig. 3 mit Dornen 16 versehen, die den Schaumstoffkern 14 in der gewünschten Lage innerhalb des geschlossenen Formwerkzeugs 2 halten. Selbstverständlich kann die Abstützung des Schaumstoffkerns 14 auch dem Unterteil 3 zugeordnet werden.

Das Oberteil 4 bildet einen seine Formfläche 15 aufweisenden Stempel 17, der in der Schließstellung des Formwerkzeugs 2 formschlüssig in das Unterteil 3 eintaucht, sodass mithilfe des Stempels 17 ein Nachverdichten des herzustellenden Kunststoffmantels 18 des Schaumstoffkerns 14 möglich wird. Wie insbesondere aus der Fig. 3 ersichtlich ist, kann der Stempel 17 im Oberteil 4 in Anstellrichtung auf Säulen 19 verschiebbar geführt und vorzugsweise gegen eine Rückstellkraft, insbesondere gegen die Kraft von Druckfedern 20, durch einen Stelltrieb 21, beispielsweise durch Spindeltriebe oder Hydraulikzylinder, zusätzlich beaufschlagt werden, um bei geschlossenem Formwerkzeug 2 gegen die Rückstellkraft tiefer in das Unterteil 3 einzutauchen. Dieses Konstruktionsmerkmal kann auch dazu genützt werden, die Dornen 16 in den in das Unterteil 3 eingelegten Schaumstoffkern 14 in einem Ausmaß einzustechen, das beim Rückstellen des Stempels 17 in die Schließstellung die geforderte Beschichtungskavität zwischen dem Schaumstoffkern 14 und den Formflächen 15 sicherstellt.

Um beispielsweise einen mit einem Fasergewebe aus Glas oder Kohlenstoff verstärkten Schaumstoffkern mit einem Polyamid 6 zu beschichten, wird nach dem Schließen des Formwerkzeugs 2, in dem der Schaumstoffkern 14 unter Freihaltung einer Beschichtungskavität zwischen Schaumstoffkern 14 und den Formflächen 15 des Formwerkzeugs 2 mittels der Dornen 16 gehalten wird, das Reaktionsgemisch mit dem zu polymerisierenden Caprolactam in der Ausgangsstellung des Gestells 1 nach der Fig. 1 durch den Angusskanal 9 in die Beschichtungskavität eingespritzt und das Gestell 1 während des Einspritzens des Reaktionsgemischs allmählich in die in der Fig. 2 gezeichnete Endstellung verschwenkt, in der der Überlauf 10 in einem oberen Scheitelbereich der Beschichtungskavität zu liegen kommt. Dies bedeutet, dass die durch das eingespritzte Reaktionsgemisch verdrängte und vorzugsweise zugleich durch eine an den Überlauf 10 angeschlossene Vakuumpumpe abgesaugte Luft ohne Gefahr von Lufteinschlüssen in Toträumen durch den Überlauf nach oben entweichen kann, bis die Beschichtungskavität in der verschwenkten Endstellung des Formwerkzeugs 2 gemäß der Fig. 2 vollständig mit dem reagierenden Reaktionsgemisch gefüllt ist und das Caprolactam zu einem Polyamid 6 polymerisiert, das ausgehend von den Formflächen 15 fortschreitend zum Schaumstoffkern 14 hin aushärtet. Das Ende des Einspritzvorgangs kann durch einen Signalgeber angezeigt werden, der das Eindringen des Reaktionsgemisches in den Überlauf 10 erfasst, wenn der Einspritzvorgang nicht durch die Vorgabe einer entsprechenden Füllmenge gesteuert wird.

Nach einer Teilaushärtung des zu Polyamid 6 polymerisierten Caprolactams wird der den Schaumstoffkern 14 umhüllende Kunststoffmantel 18 durch den Stempel 17 mit einer Druckkraft beaufschlagt, die ein vollständiges Durchdringen des Fasergewebes bis zum Schaumstoffkern 14 bedingt und nicht nur eine fehlerfreie Oberfläche des Kunststoffmantels 18, sondern auch eine innige Verbindung des Kunststoffmantels 18 mit dem Schaumstoffkern 14 mit sich bringt.

## Patentansprüche

1. Verfahren zum Beschichten eines gegebenenfalls durch eine Faserauflage verstärkten Schaumstoffkerns (14) mit einem aus einem Reaktionsgemisch polymerisierten Kunststoff in einem aus einem Unterteil (3) und einem Oberteil (4) zusammengesetzten Formwerkzeug (2), das im Bereich seiner Stoßfläche (6) auf einander gegenüberliegenden Seiten einerseits einen Angusskanal (9) und anderseits einen Überlauf (10) aufweist, wobei der Schaumstoffkern (14) in das Formwerkzeug (2) unter Freihaltung einer Beschichtungskavität zwischen dem Schaumstoffkern (14) und den formgebenden Oberflächen (15) des Formwerkzeugs (2) eingesetzt und das Reaktionsgemisch durch den Angusskanal (9) in die Beschichtungskavität des geschlossenen Formwerkzeugs (2) eingespritzt wird, **dadurch gekennzeichnet, dass** das Reaktionsgemisch vom Angusskanal (9) in einem unteren Scheitelbereich der Beschichtungskavität zum Überlauf (10) in einem oberen Scheitelbereich ansteigend in die Beschichtungskavität eingespritzt wird und dass nach einem teilweisen Aushärten des aus dem Reaktionsgemisch entstehenden Kunststoffs die Beschichtung bis zur vollständigen Aushärtung des Kunststoffs durch einen die Formfläche (15) des Oberteils (4) bildenden Stempel (17) an den Schaumstoffkern (14) angedrückt gehalten wird.

2. Verfahren nach Anspruch 1, **dadurch gekennzeichnet, dass** das Reaktionsgemisch in die Beschichtungskavität eingespritzt wird, während das Formwerkzeug (2) um eine quer zu einem den Angusskanal (9) mit dem Überlauf (10) verbindenden Durchmesser des Unterwerkzeugs (3) und parallel zu seiner Stoßfläche (6) verlaufende Schwenkachse (12) aus einer Ausgangsstellung in eine Endstellung verschwenkt wird, in der der Überlauf (10) im oberen Scheitelbereich der Beschichtungskavität liegt.

3. Verfahren nach Anspruch 1 oder 2, **dadurch gekennzeichnet, dass** die Beschichtungskavität während des Befüllens mit dem Reaktionsgemisch durch den Überlauf (10) mit einem Unterdruck beaufschlagbar ist.

4. Vorrichtung zum Beschichten eines gegebenenfalls durch eine Faserauflage verstärkten Schaumstoffkerns (14) mit einem aus einem Reaktionsgemisch aushärtenden Kunststoff mit einem aus einem Unterteil (3) und einem Oberteil (4) zusammengesetzten Formwerkzeug (2), dessen Unterteil (3) im Bereich seiner Stoßfläche (6) auf einander gegenüberliegenden Seiten einerseits einen Angusskanal (9) und anderseits einen Überlauf (10) aufweist, und mit einem das Formwerkzeug (2) aufnehmenden Gestell (1), das eine Anstellführung (5) und einen Anstelltrieb (7) für das gegenüber dem gestellfesten Unterteil (3) verlagerbare Oberteil (4) bildet, wobei
das Gestell (1) in einem Tragrahmen (11) um eine Schwenkachse (12) verschwenkbar gelagert ist, die quer zu einer einerseits durch die Anstellrichtung des Oberteils (4) und anderseits durch einen den Angusskanal (9) mit dem Überlauf (10) verbindenden Durchmesser des Unterteils (3) bestimmten Ebene verläuft, und dass das Oberteil (4) einen in Anstellrichtung verlagerbaren, die Formfläche (15) des Oberteils (4) bildenden Stempel (17) umfasst.

5. Vorrichtung nach Anspruch 4, **dadurch gekennzeichnet, dass** der Stempel (17) im Oberteil (4) in Anstellrichtung verschiebbar gelagert und durch einen Stelltrieb (21) antreibbar ist.

6. Vorrichtung nach Anspruch 5, **dadurch gekennzeichnet, dass** der Stempel (17) im Oberteil (4) gegen eine Rückstellkraft verschiebbar gelagert ist.

7. Vorrichtung nach einem der Ansprüche 4 bis 6, **dadurch gekennzeichnet, dass** der Überlauf (10) an eine Vakuumpumpe anschließbar ist.

8. Vorrichtung nach einem der Ansprüche 4 bis 7, **dadurch gekennzeichnet, dass** der Überlauf (10) einen an eine Steuerung für die Fördereinrichtung des Reaktionsgemischs in den Angusskanal (9) angeschlossenen Signalgeber für das Eindringen des Reaktionsgemischs in den Überlauf (10) aufweist.

## Claims

1. Method for coating a foam core (14), which may be reinforced by a fibre layer, with a plastic material polymerized from a reaction mixture in a forming tool (2) comprising a lower part (3) and an upper part (4), which comprises, in the region of its contact surface (6) on opposite sides, a sprue channel (9) on the one hand and an overflow (10) on the other, wherein the foam core (14) is inserted into the forming tool (2) while keeping a coating cavity between the foam core (14) and the forming surfaces (15) of the forming tool (2) and the reaction mixture is injected through the sprue channel (9) into the coating cavity of the closed forming tool (2), **characterized in that** the reaction mixture is injected from the sprue channel (9) in a lower apex region of the coating cavity to the overflow (10) in an upper apex region rising into the coating cavity, and that after partial curing of the plastic resulting from the reaction mixture, the coating is held pressed against the foam core (14) by a stamp (17) forming the forming surface (15) of the upper part (4) until the plastic has completely cured.

2. Method according to claim 1, **characterized in that** the reaction mixture is injected into the coating cavity while the forming tool (2) is pivoted about a pivot axis (12) extending transversely to a diameter of the lower tool (3) connecting the sprue channel (9) with the overflow (10) and parallel to its contact surface (6) from an initial position into an end position in which the overflow (10) is located in the upper apex region of the coating cavity.

3. Method according to claim 1 or 2, **characterized in that** the coating cavity is capable of being subjected to negative pressure through the overflow (10) during filling with the reaction mixture.

4. Device for coating a foam core (14), which may be reinforced by a fibre layer, with a plastic material which cures from a reaction mixture, comprising a forming tool (2) composed of a lower part (3) and an upper part (4), the lower part (3) of which has, in the region of its contact surface (6) on opposite sides, a sprue channel (9) on the one hand and an overflow (10) on the other, and with a frame (1) receiving the forming tool (2), which forms a positioning guide (5) and a positioning drive (7) for the upper part (4) which can be displaced relative to the frame-fixed lower part (3), wherein the frame (1) is mounted pivotably in a support frame (11) about a pivot axis (12) which extends transversely to a plane defined on the one hand by the direction of positioning of the upper part (4) and on the other hand by a diameter of the lower part (3) connecting the sprue channel (9) with the overflow (10), and that the upper part (4) comprises a stamp (17) which can be displaced in the positioning direction and forms the forming surface (15) of the upper part (4).

5. Device according to claim 4, **characterized in that** the stamp (17) is mounted displaceably in the upper part (4) in the positioning direction and can be driven by an actuating drive (21).

6. Device according to claim 5, **characterized in that** the stamp (17) is mounted displaceably in the upper part (4) against a restoring force.

7. Device according to one of the claims 4 to 6, **characterized in that** the overflow (10) can be connected to a vacuum pump.

8. Device according to one of the claims 4 to 7, **characterized in that** the overflow (10) comprises a signal generator connected to a control device for the conveying device for the reaction mixture into the sprue channel (9) for the penetration of the reaction mixture into the overflow (10).

## Revendications

1. Procédé pour revêtir un noyau en mousse (14), éventuellement renforcé par une couche de fibres avec une matière plastique polymérisée à partir d'un mélange réactionnel dans un outil de moulage (2) composé d'une partie inférieure (3) et d'une partie supérieure (4), qui présente, dans la zone de sa surface de contact (6) sur les côtés opposés l'un à l'autre d'une part un canal de coulée (9) et d'autre part un trop-plein (10), le noyau en mousse (14) étant inséré dans l'outil de moulage (2) en laissant libre une cavité de revêtement entre le noyau de mousse (14) et les surfaces de moulage (15) de l'outil de moulage (2) et le mélange réactionnel étant injecté à travers le canal de coulée (9) dans la cavité de revêtement de l'outil de moulage fermé (2), **caractérisé en ce que** le mélange réactionnel est injecté à partir du canal de coulée (9) dans une zone de sommet inférieure de la cavité de revêtement vers le trop-plein (10) dans une zone sommitale supérieure, de manière ascendante dans la cavité de revêtement, et **en ce qu'**après un durcissement partiel de la matière plastique issue du mélange réactionnel, le revêtement est maintenu pressé contre le noyau en mousse (14) jusqu'au durcissement complet de la matière plastique par un poinçon (17) formant la surface de moulage (15) de la partie supérieure (4).

2. Procédé selon la revendication 1, **caractérisé en ce que** le mélange réactionnel est injecté dans la cavité de revêtement pendant que l'outil de moulage (2) est pivoté autour d'un axe de pivotement (12) s'étendant transversalement à un diamètre de l'outil inférieur (3) reliant le canal d'injection (9) au trop-plein (10) et parallèlement à sa surface de contact (6), dans lequel le trop-plein (10) se trouve dans la zone supérieure de la cavité de revêtement.

3. Procédé selon la revendication 1 ou 2, **caractérisé en ce que** la cavité de revêtement peut être soumise à une dépression par le trop-plein (10) pendant le remplissage avec le mélange réactionnel.

4. Dispositif pour revêtir un noyau en mousse (14), éventuellement renforcé par une couche de fibres, avec une matière plastique durcissant à partir d'un mélange réactionnel, comprenant un outil de formage (2) composé d'une partie inférieure (3) et d'une partie supérieure (4), dont la partie inférieure (3) présente, dans la zone de sa surface de contact (6), sur les côtés opposés l'un à l'autre, d'une part un canal de coulée (9) et, d'autre part, un trop-plein (10), et avec un châssis (1) recevant l'outil de moulage (2), qui forme un guide de positionnement (5) et un dispositif de positionnement (7) pour la partie supérieure (4) déplaçable par rapport à la partie inférieure (3) fixe par rapport au bâti, le bâti (1) étant monté de manière pivotante dans un cadre porteur (11) autour d'un axe de pivotement (12) qui s'étend transversalement à un plan défini d'une part par la direction de positionnement de la partie supérieure (4) et d'autre part par un diamètre de la partie inférieure (3) reliant le canal de coulée (9) au trop-plein (10), et en ce que la partie supérieure (4) comprend un poinçon (17) déplaçable dans la direction de réglage et formant la surface de moulage (15) de la partie supérieure (4).

5. Dispositif selon la revendication 4, **caractérisé en ce que** le poinçon (17) est monté dans la partie supérieure (4) de manière à pouvoir être déplacé dans la direction de positionnement et peut être entraîné par un mécanisme de commande (21).

6. Dispositif selon la revendication 5, **caractérisé en ce que** le poinçon (17) est monté dans la partie supérieure (4) de manière à pouvoir être déplacé contre une force de rappel.

7. Dispositif selon l'une des revendications 4 à 6, **caractérisé en ce que** le trop-plein (10) peut être raccordé à une pompe à vide.

8. Dispositif selon l'une des revendications 4 à 7, **caractérisé en ce que** le trop-plein (10) comporte un émetteur de signal raccordé à une commande pour le dispositif de transport du mélange réactionnel dans le canal de coulée (9) et destiné à signaler la pénétration du mélange réactionnel dans le trop-plein (10).
